Europäisches Patentamt

European Patent Office

Office européen des brevets

(11) Numéro de publication : **0 392 890 B1**

(12)                            **FASCICULE DE BREVET EUROPEEN**

(45) Date de publication du fascicule du brevet :
**21.10.92 Bulletin 92/43**

(51) Int. Cl.⁵ : **A01F 25/20, B23Q 11/06**

(21) Numéro de dépôt : **90400718.4**

(22) Date de dépôt : **16.03.90**

(54) **Dispositif de coupe pour désileuse, et dispositif de coupe rotatif pour végétaux, notamment ensilés.**

(30) Priorité : **23.03.89 FR 8903870**

(43) Date de publication de la demande :
**17.10.90 Bulletin 90/42**

(45) Mention de la délivrance du brevet :
**21.10.92 Bulletin 92/43**

(84) Etats contractants désignés :
**AT BE CH DE ES FR GB IT LI LU NL SE**

(56) Documents cités :
**EP-A- 0 169 759
DE-A- 3 602 403**

(73) Titulaire : **ETABLISSEMENTS LUCAS G.
22 rue du Stade, La Verrie
F-85130 La Gaubretiere (FR)**

(72) Inventeur : **Lucas, Gérard
22 Rue du Stade, La Verrie
F-85130 La Gaubretière (FR)**

(74) Mandataire : **Bouju, André
Cabinet Bouju Derambure (Bugnion) S.A. B.P. 6250
F-75818 Paris Cédex 17 (FR)**

**Description**

La présente invention concerne un dispositif de coupe pour désileuse.

La présente invention concerne également un dispositif de coupe rotatif pour végétaux, notamment ensilés, en particulier un dispositif de coupe latérale pour désileuse.

Les désileuses comprennent un dispositif de coupe comprenant une monture, par exemple un panneau, dont un bord inférieur est muni de moyens de coupe frontale pour couper, par descente de la monture, une tranche d'ensilage dans un front d'ensilage, tranche qui est ensuite amenée dans une benne de la désileuse par l'ouverture arrière de celle-ci, ou par exemple évacuée sur un convoyeur.

Pour faciliter la coupe de la tranche, certains dispositifs de coupe pour désileuse comprennent un disque rotatif de coupe latéral qui est placé en regard d'une paroi latérale de la monture. Le disque rotatif complète par une coupe latérale la coupe frontale assurée par les moyens de coupe frontale. La tranche d'ensilage se détache ainsi beaucoup plus facilement du reste de l'ensilage. Ceci minimise l'effort d'arrachement à exercer sur la tranche pour l'amener à l'intérieur de la benne, et minimise par conséquent les contraintes subies par le matériel. D'autre part, le front d'ensilage est laissé plus net, ce qui est favorable à sa bonne conservation.

Dans les dispositifs connus, illustrés par exemple par le EP-A-0 169 759 ou le DE-A-36 02 403, on rencontre parfois un problème de bourrage des végétaux entre le disque rotatif de coupe latéral et la paroi latérale de la monture située en regard. Lorsqu'un tel bourrage se produit, le disque de coupe rotatif est freiné et d'autre part l'accumulation de plus en plus forte des végétaux dans l'intervalle précité finit par exercer une force axiale considérable sur le disque. Ces forces axiales occasionnent parfois des ruptures mécaniques.

On a essayé de réduire le jeu entre le disque et la paroi latérale en regard, mais ceci n'a pas permis de résoudre le problème. Les systèmes du genre racloir se sont également avérés inefficaces.

Le but de l'invention est ainsi de proposer un dispositif de coupe pour désileuse et un dispositif de coupe rotatif pour végétaux, notamment ensilés, qui ne pose pas de problème de bourrage entre le disque et une paroi située en regard.

Suivant un premier aspect de l'invention, le dispositif de coupe pour désileuse, comprenant une monture, des moyens de coupe frontale le long d'un bord inférieur de la monture, et un disque rotatif coupant monté sur un côté du dispositif de coupe pour tourner selon un axe transversal à une paroi latérale du dispositif de coupe située en regard d'une partie de l'une des faces du disque, est caractérisé en ce qu'il comprend des moyens de protection empêchés de tourner avec le disque et comprenant une lèvre annulaire centrée sur l'axe de rotation du disque et adjacente à ladite face du disque.

Selon un autre aspect de l'invention, le dispositif de coupe rotatif pour végétaux, notamment ensilés, en particulier dispositif de coupe latéral pour désileuse, comprenant un disque rotatif coupant monté pour tourner selon un axe transversal à une paroi située en regard de l'une des faces du disque, est caractérisé en ce qu'il comprend des moyens de protection empêchés de tourner avec le disque et comprenant une lèvre annulaire centrée sur l'axe de rotation du disque et adjacentes à ladite face du disque.

Grâce à la lèvre annulaire, il est créé un véritable joint mécanique entre la face tournante du disque et les surfaces non tournantes voisines, de sorte que les végétaux sont efficacement empêchés de progresser radialement vers l'axe du disque au-delà du joint mécanique précité. Les végétaux restent en contact avec la partie extérieure de la face du disque, ce qui les soumet à la force centrifuge. Comme la lèvre est circulaire, l'adhérence entre le disque qui tourne et les végétaux ne tend jamais à entraîner les végétaux dans un éventuel interstice entre le disque et la lèvre.

Selon un troisième aspect de l'invention, le dispositif de coupe rotatif pour végétaux, notamment ensilés, en particulier dispositif de coupe latéral pour désileuse, comprenant un disque rotatif coupant monté pour tourner selon un axe transversal à une paroi située en regard de l'une des faces du disque, est caractérisé par des moyens de protection annulaires solidaires de la paroi à l'égard des rotations autour de l'axe, et par un joint à labyrinthe entre les moyens de protection annulaires et ladite face du disque, le joint à labyrinthe empêchant les végétaux de progresser vers l'axe au-delà du joint le long de ladite face.

D'autres particularités et avantages de l'invention ressortiront encore de la description ci-après.

Aux dessins annexés, donnés à titre d'exemples non limitatifs :

- la figure 1 est une vue en élévation d'une désileuse distributrice en cours de fonctionnement ;
- la figure 2 est une vue éclatée du dispositif de coupe de la désileuse de la figure 1 ;
- la figure 3 est une vue partielle en coupe selon un plan passant par l'axe du disque de coupe latéral ;
- la figure 4 est une vue en coupe, à échelle agrandie, selon le plan IV-IV de la figure 3, avec arrachement ;
- la figure 5 est une vue en perspective de la pièce de forme ;
- la figure 6 est une vue de face de la pièce de forme ; et
- la figure 7 est une vue en élévation de la pièce de forme.

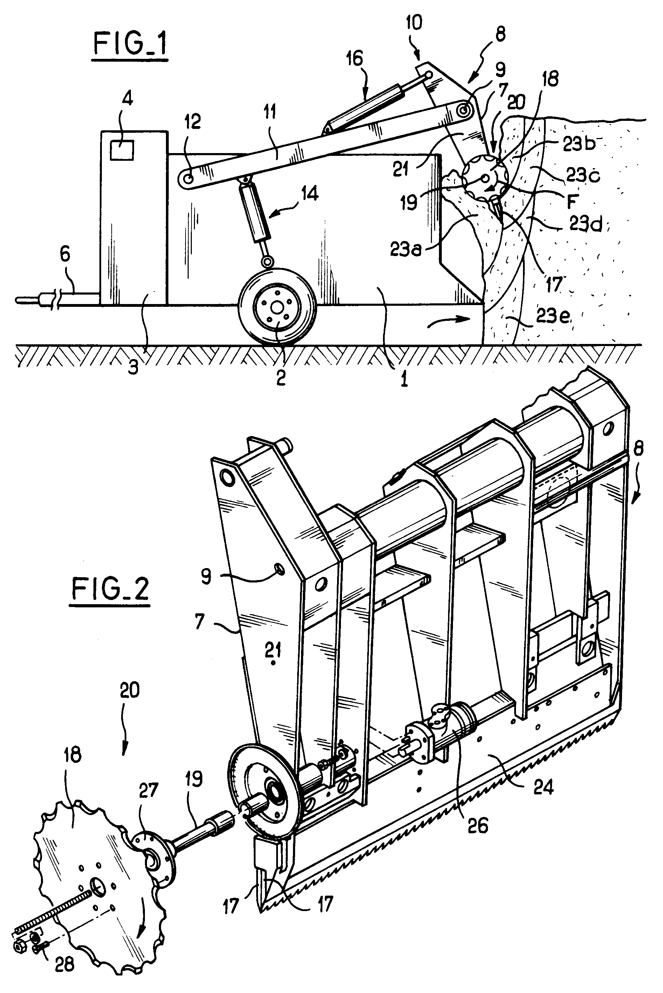

Dans l'exemple représenté à la figure 1, la désileuse distributrice comprend une benne 1 montée sur roues 2. L'avant de la benne 1 est délimité par un dispositif démêleur 3 capable de démêler les végétaux contenus dans la benne 1 et de les faire sortir par soufflage à travers l'une ou l'autre de deux trappes latérales 4 situées de chaque côté de la machine pour distribuer les végétaux dans les mangeoires ou dans les litières des animaux. La désileuse distributrice peut être attelée à un tracteur au moyen d'une flèche d'attelage 6.

A son extrémité arrière, la benne 1 est ouverte mais peut être fermée par le panneau 7 d'un poussoir tranchant 8 qui est articulé selon un axe horizontal 9 à deux bras longitudinaux 11 disposés de part et d'autre de la benne 1 et montés oscillant autour d'un axe horizontal 12 voisin du démêleur 3. Un vérin 14 actionne les bras 11 autour de l'axe 12. Un autre vérin 16 actionne le panneau 7 autour de l'axe horizontal 9.

A son extrémité inférieure, le poussoir tranchant 8 comprend des moyens tranchants 17 le long du bord inférieur du panneau 7. Les moyens tranchants 17 sont des lames qui s'étendent horizontalement selon la direction transversale de la désileuse.

Le poussoir tranchant 8 fait partie d'un dispositif de coupe 10 comprenant en outre un dispositif de coupe latéral 20, lequel comprend à son tour un disque rotatif coupant 18 entraîné en rotation autour d'un axe horizontal 19 transversal à une paroi latérale 21 du panneau 7.

Pour effectuer un désilage, on actionne à plusieurs reprises le panneau 7 de haut en bas au moyen du vérin 14. En même temps, les lames 17 sont actionnées en va-et-vient horizontal pour couper frontalement des tranches successives 23a, 23b, 23c, 23d, 23e dans le front d'ensilage 23, tandis que le disque 18 est actionné en rotation selon la flèche F pour couper latéralement lesdites tranches du côté où elles sont rattachées au reste de l'ensilage. Lorsqu'une tranche a ainsi été découpée, on actionne le vérin 16 à l'extension pour ramener la tranche qui vient d'être coupée vers l'intérieur de la benne et pousser les tranches précédemment coupées vers l'avant de celle-ci.

Comme le montre la figure 2, les lames 17 sont adossées directement l'une à l'autre entre deux guides 24 situées de part et d'autre du panneau 7. Un arbre 19a d'actionnement du disque 18 est relié à un moteur hydraulique 26 situé dans l'épaisseur du panneau. A son autre extrémité, l'arbre 19a est terminé par une platine 27 à laquelle le disque coupant 18 est fixé au moyen de vis 28.

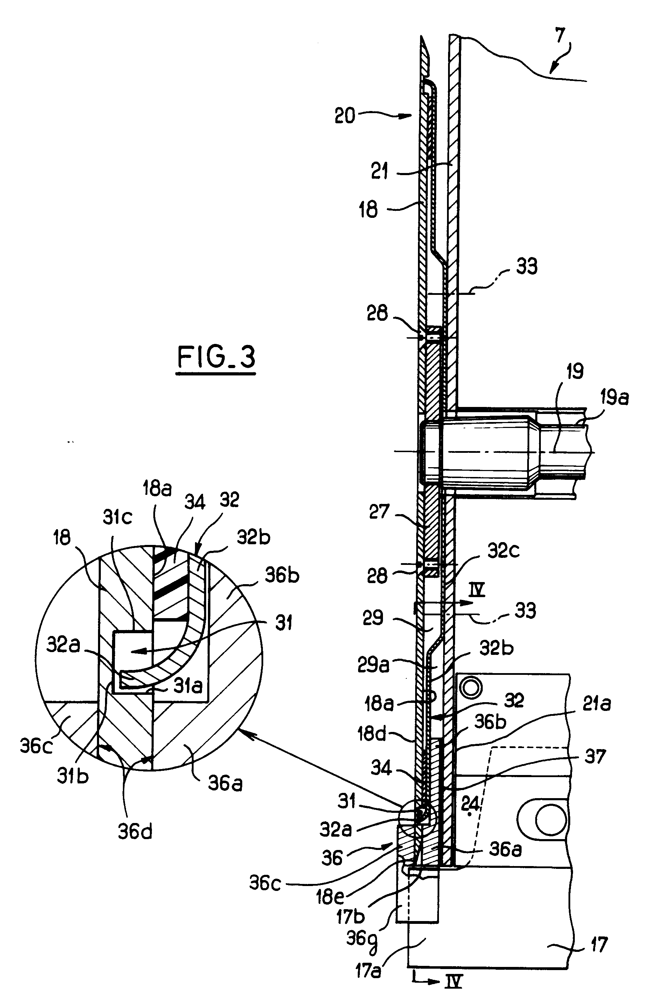

Compte tenu de la rotation du disque 18, les végétaux tendent, dans les machines connues antérieurement, à s'accumuler sous une forte pression dans l'intervalle 29 (figure 3) compris entre la paroi latérale 21 du panneau 7 et la face 18a du disque 18 qui est tournée vers la paroi 21. Cette pression peut suffire à arracher les vis telles que 28 ou à bloquer le disque 18 par exemple.

Suivant l'invention, la face 18a du disque 18 est munie d'une gorge annulaire 31 centrée sur l'axe de rotation 19 du disque 18. De plus, une cloche 32 ayant pour axe l'axe 19 est fixée à la paroi 21 au moyen de vis 33 situées radialement à l'extérieur de la platine 27. La cloche 32 est située entre le disque 18 et la paroi 21, et elle est empêchée de tourner autour de l'axe 19 au moyen des vis 33. Une lèvre périphérique 32a de la cloche 32, ayant pour axe l'axe 19, est engagée dans la gorge 31.

Comme le montre le détail agrandi de la figure 3, la gorge 31 a un profil rectangulaire. La lèvre 32a est à faible distance d'une face radialement extérieure cylindrique 31a de la gorge 31 et à faible distance du fond plan 31b de la gorge 31. Par contre, la lèvre 32a est à distance relativement importante de la face cylindrique radialement intérieure 31c de la gorge 31.

Il est ainsi formé entre le disque 18 et la cloche 32 un joint mécanique sans contact, que l'on pourrait encore appeler un joint à labyrinthe.

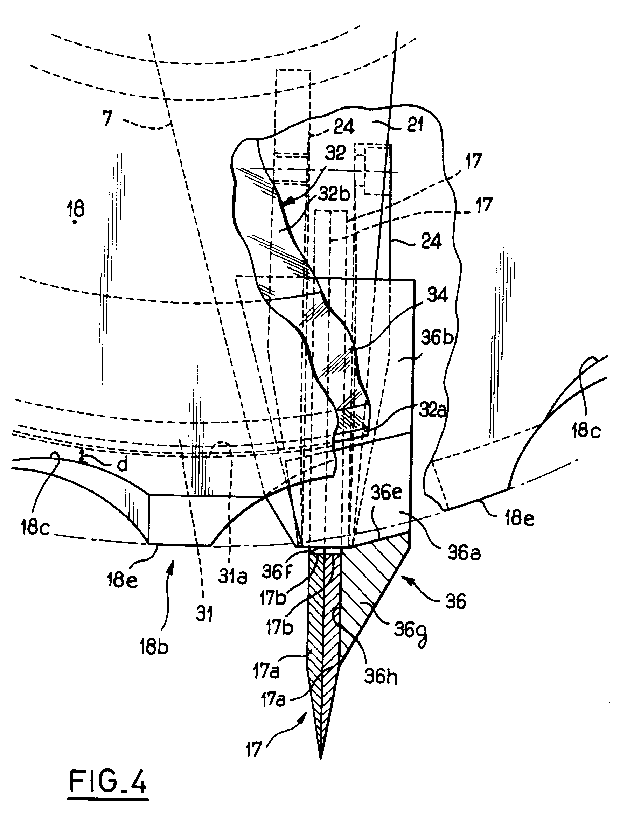

Comme le montre la figure 4, le disque 18 présente à sa périphérie une denture 18b qui définit des fonds de denture 18c situés radialement au-delà de la gorge 31. Toutefois, la distance radiale minimale $\underline{d}$ entre chaque fond de denture 18c et la paroi radialement extérieure 31a de la gorge 31 est rendue aussi faible que possible compte tenu des impératifs de résistance mécanique et de la nécessité de prévoir une réserve de matière pour les réaffûtages du disque 18. Ainsi, seule la périphérie du disque, comportant la denture, se trouve directement en regard de la paroi 21. Tout le reste de la surface du disque est recouvert, du côté de la paroi 21, par la cloche 32 qui est immobile en rotation. Le joint mécanique formé par la lèvre 32a et la gorge 31 empêche les végétaux de passer entre le disque 18 et la cloche 32. Les végétaux sont donc déviés vers un intervalle résiduel 29a situé entre la paroi 21 et un voile périphérique 32b de la cloche 32, terminé périphériquement par la lèvre 32a. Mais comme il n'y a pas de rotation relative entre la cloche 32 et la paroi 21, la tendance au bourrage dans cet intervalle résiduel est beaucoup moins grande.

On aurait pu envisager de donner à la cloche un profil tel qu'il n'y ait aucun intervalle résiduel entre la cloche et la paroi 21. Toutefois, la capacité de pénétration du disque 18 dans les végétaux ensilés aurait été fortement diminuée. Le voile périphérique 32b de la cloche 32 est donc aussi peu profond que possible, de manière à former une surépaisseur aussi faible que possible sur la face intérieure 18a du disque 18. Par contre, une région radialement intérieure 32c de la cloche 32 est plus profonde pour être fixée à plat contre la paroi 21 à l'aide des vis 33 et pour recevoir la platine 27.

La cloche 32 est réalisée en tôle avec une épaisseur suffisamment faible pour avoir une certaine flexibilité élastique. La forme initiale de la cloche 32 est telle que la cloche 32 est, une fois montée, déformée élastiquement dans le sens de l'évasement par appui d'une garniture anti-friction annulaire 34 contre la face 18a du disque 18. La garniture anti-friction 34 est collée contre le voile périphérique 32b au voisinage de la lèvre 32a de manière à s'appuyer contre la face 18a au voisinage immédiat de la gorge 31. La garniture anti-friction 34 peut être en polytétrafluoréthylène ou en bronze, et son épaisseur est telle que, comme indiqué précédemment, la lèvre 32a soit hors de contact avec le fond 31b de la gorge 31.

A titre d'exemple, la cloche 32 peut être réalisée en tôle ayant 1,8 mm de diamètre, l'épaisseur de la garniture anti-friction 34 peut être de 2 mm, la profondeur axiale de la gorge 31 peut être de 3 mm, et la distance entre la face 18a et la paroi 21 peut être de 12 mm.

Comme le montre la figure 3, les guides de lames 24 ne s'étendent que jusqu'à une face intérieure 21a de la tôle définissant la paroi 21. Par contre, le lames 17 présentent une extrémité 17a de moindre hauteur qui s'étend au-delà de la paroi 21 et même légèrement au-delà du plan de la face extérieure 18d du disque 18. Un bord supérieur 17b de l'extrémité 17a de chaque lame 17 est situé à très faible distance radiale au-delà de la trajectoire circulaire des sommets de denture 18e du disque 18. Ceci assure la continuité entre la coupe réalisée par les lames 17 et celle réalisée par le disque 18. Cependant, la région de l'intervalle 29 qui est située directement au-dessus des bords supérieurs 17b des extrémités 17a des lames 17 est particulièrement exposée aux bourrages. Dans cette région, le bourrage a en effet pour cause, non seulement la rotation du disque, mais encore le mouvement de pénétration du poussoir tranchant 8 dans la matière ensilée.

Un perfectionnement important de la présente invention, qui va maintenant être décrit, est basé sur la constatation que la partie de la périphérie du disque 18 qui se trouve directement au-dessus des bords 17b, c'est-à-dire celle qui est adjacente à la région où la tendance aux bourrages est la plus forte, peut sans inconvénient être inactive, c'est-à-dire ne pas contribuer au découpage de la tranche d'ensilage. Il suffit que le disque soit actif du côté des lames 17 qui est situé vers l'avant de la désileuse.

Selon ce perfectionnement, une pièce de forme 36 liée par une soudure 37 à la paroi 21, masque la périphérie du disque 18 au voisinage des bords 17b des extrémités 17a et comporte une aile intérieure 36a qui obture sensiblement l'intervalle situé entre la paroi 21 et la périphérie du disque 18 radialement au-delà de la gorge 31, c'est-à-dire l'intervalle entre la paroi 21 et la denture 18b du disque 18.

La pièce de forme 36, qui est également visible aux figues 5 à 7, comporte en outre une ailette 36b qui est de moindre épaisseur que l'aile 36a et qui prolonge l'aile 36a vers l'axe 19 de manière à combler, au-dessus de l'aile 36a, une partie de l'intervalle résiduel 29a.

L'épaisseur de l'aile 36a parallèlement à l'axe 19 est sensiblement égale à la distance entre la face 18a du disque 18 et la paroi 21, c'est-à-dire 12 mm dans l'exemple précédent. L'épaisseur de l'ailette 36b parallèlement à l'axe 19 est sensiblement égale à la distance libre entre le voile 32b de la cloche 32 et la paroi 21, c'est-à-dire environ 8 mm dans l'exemple précédent.

La pièce de forme 36 comprend également une aile extérieure 36c qui masque au voisinage des extrémités 17a, la face extérieure de la denture périphérique 18b du disque 18.

Les ailes 36a et 36c forment ainsi entre elles une entaille 36d dont la largeur, mesurée parallèlement à l'axe 19 du disque 18, est à peine supérieure à l'épaisseur du disque 18. Il est en effet préférable que le disque 18 frotte légèrement dans l'entaille 36d. Ceci lui assure un guidage dans une région où il est sollicité de manière défavorable. Puisque c'est la denture du disque 18 qui circule dans l'entaille 36d, il n'y a pas de risque de bourrage, les creux de denture éliminant au fur et à mesure les végétaux qui parviennent à s'introduire dans l'entaille 36d.

Le fond 36e de l'entaille 36d est situé en arrière des lames 17 relativement au sens de traction de la désileuse. Au-dessus des bords 17b des lames 17, l'entaille 36d communique avec un évidement 36f prévu dans la pièce de forme 36 pour accueillir les extrémités 17a des lames 17.

Sous le fond 36e de l'entaille 36d, la pièce de forme 36 forme un bec 36g se rétrécissant vers le bas. Le bec 36g comporte une face 36h qui contribue à définir l'évidement 36f et contre laquelle la face extérieure de l'extrémité 17a de la lame 17 située la plus en arrière est appuyée de manière glissante. Le bec 36g constitue ainsi une conformation de guidage des extrémités 17a des lames 17. Le bec 36g s'étend sensiblement jusqu'à la denture de la lame 17 arrière.

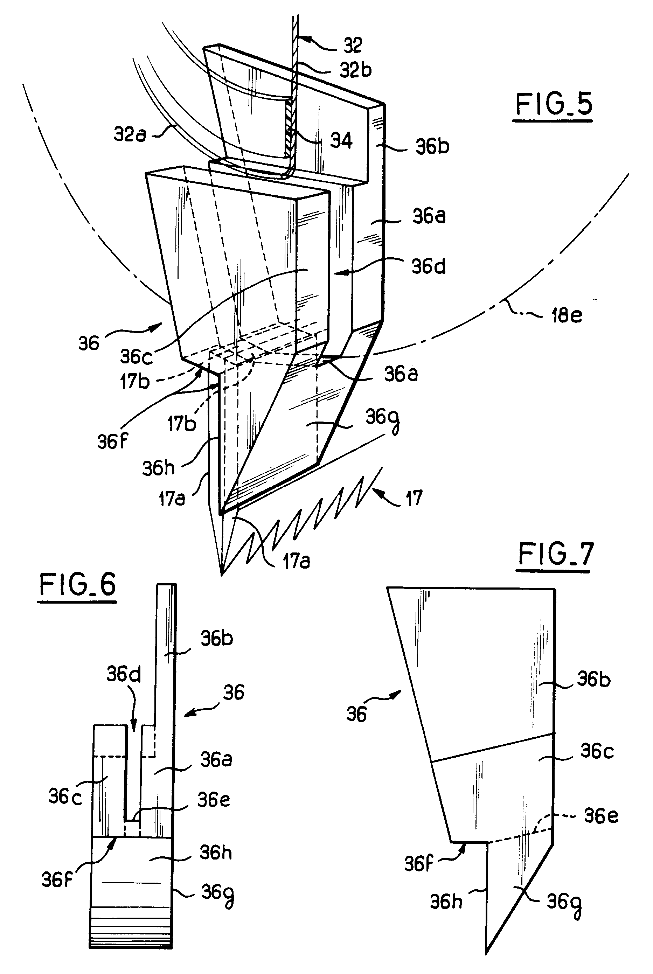

Comme le montre la figure 2, le panneau 7 a un profil en coin, effilé vers le bas, de manière à pénétrer avec un maximum d'efficacité dans les végétaux à désiler. En particulier, la paroi 21 présente une telle forme en coin. Et comme le montrent les figures 4 et 5, les ailes 36a et 36c, et l'ailette 36b, épousent sensiblement le bas de ce profil du panneau 21. Ainsi, la pièce de forme 36 protège du bourrage tout le bas de l'intervalle 29 et de l'intervalle résiduel 29a et fait efficacement obstacle à la remontée d'un bourrage vers le reste de l'intervalle résiduel 29a.

Il s'est avéré que l'invention résolvait de manière remarquable à la fois le problème des bourrages entre le disque 18 et la paroi 21 et les problèmes de guidage du disque 18 et des extrémités des lames 17. L'aile 36c de la pièce de forme 36, en masquant la face extérieure de la denture 36b, empêche les végétaux de passer par les creux de denture pour venir s'insérer sous forte pression dans les interstices qui subsistent nécessairement entre la pièce de forme 36, le disque 18, la gorge 31, la lèvre 32a, etc... Le bec 36g de la pièce de forme 36 soutient efficacement les extrémités 17a des lames 17, en particulier lorsque ces extrémités sont fortement sollicitées en flexion lorsqu'une tranche de matière désilée doit être poussée vers l'intérieur de la benne de la désileuse.

Bien entendu, l'invention n'est pas limitée à l'exemple décrit et représenté.

Par exemple, la lèvre pourrait être prévue directement à la fabrication sur le panneau 21. On pourrait également prévoir que la pièce de forme 36a est fixée à la cloche 32, ce qui permettrait de définir avec précision le jeu entre l'extrémité libre de la lèvre 32a et le fond 31b de la gorge 31 sans avoir recours à la garniture anti-friction 34.

Il est possible de supprimer la gorge, la lèvre venant simplement en contact ou quasi-contact avec la faces du disque.

## Revendications

1. Dispositif de coupe pour désileuse, comprenant une monture (7), des moyens de coupe frontale (17) le long d'un bord inférieur de la monture (7), et un disque rotatif coupant (18) monté sur un côté du dispositif de coupe pour tourner selon un axe (19) transversal à une paroi latérale (21) du dispositif de coupe située en regard d'une partie de l'une (18a) des faces du disque (18), caractérisé en ce qu'il comprend des moyens de protection (32) empêchés de tourner avec le disque (18) et comprenant une lèvre annulaire (32a) centrée sur l'axe (19) de rotation du disque et adjacente à ladite face (18a) du disque (18).

2. Dispositif selon la revendication 1, caractérisé par des moyens (36) solidaires de la monture (7) qui, au voisinage des moyens de coupe frontale (17), masquent la périphérie (18b) du disque (18) et obturent sensiblement un intervalle (29) entre la périphérie du disque (18) et la paroi latérale (21).

3. Dispositif conforme à la revendication 2, caractérisé en ce que lesdits moyens (36) solidaires de la monture masquent également, au voisinage des moyens de coupe frontale (17), une face extérieure d'une denture périphérique (18b) du disque (18).

4. Dispositif conforme à l'une des revendications 2 ou 3, caractérisé en ce que les moyens (36) solidaires de la monture (7) obturent en outre, au voisinage des moyens de coupe frontale (17), un intervalle (29a) entre la paroi latérale (21) et un voile (32b) faisant partie des moyens de protection et dont un bord périphérique constitue la lèvre (32a) précitée.

5. Dispositif conforme à l'une des revendications 2 à 4, caractérisé en ce que les moyens de coupe frontale comprennent au moins une lame mobile en va-et-vient (17) et en ce que lesdits moyens (36) solidaires de la monture (7) comprennent en outre une conformation (36h) de guidage d'une extrémité (17a) de la lame (17) mobile en va-et-vient.

6. Dispositif conforme à l'une des revendications 2 à 5, caractérisé en ce que lesdits moyens solidaires de la monture comprennent une pièce de forme (36) rendue solidaire de la monture (7).

7. Dispositif conforme à l'une des revendications 1 à 6, caractérisé en ce que la monture est un panneau (7) et forme avec les moyens de coupe frontale (17) un poussoir tranchant (8) destiné à être monté oscillant à l'arrière d'une benne (1) de désileuse pour couper frontalement et latéralement des tranches successives (23a à 23e) de végétaux ensilés et amener ces tranches successivement dans la benne (1) en leur appliquant une poussée dirigée vers l'avant de la benne (1).

8. Dispositif de coupe rotatif pour végétaux, notamment ensilés, en particulier dispositif de coupe latéral pour désileuse, comprenant un disque rotatif coupant (18) monté pour tourner selon un axe (19) transversal à une paroi (21) située en regard de l'une (18a) des faces du disque (18), caractérisé en ce qu'il comprend des moyens de protection (32) empêchés de tourner avec le disque (18) et comprenant une lèvre annulaire (32a) centrée sur l'axe de rotation (19) du disque et adjacente à ladite face (18a) du disque (18).

9. Dispositif conforme à l'une des revendications 1 à 8, caractérisé en ce que les moyens de protection comprennent un voile flexible (32b) portant la lèvre annulaire (32a) à sa périphérie.

10. Dispositif conforme à la revendication 9, caractérisé par un intervalle résiduel (29a) entre le voile flexible et la paroi (21).

11. Dispositif conforme à l'une des revendications 9 ou 10, caractérisé en ce que le voile flexible (32b) est appuyé sur le disque (18) par l'intermédiaire d'une garniture de friction annulaire (34) voisine de la lèvre (32a).

12. Dispositif conforme à l'une des revendications 1 à 11, caractérisé en ce que la lèvre (32a) est constituée par le bord périphérique d'une cloche (32) fixée à ladite paroi (21).

13. Dispositif conforme à l'une des revendications 1 à 12, caractérisé en ce que les fonds (18c) d'une denture périphérique (18b) du disque (18) sont situés à faible distance radiale (d) au-delà de la lèvre (31).

14. Dispositif conforme à l'une des revendications 1 à 13, caractérisé en ce que la lèvre (32a) est engagée dans une gorge annulaire (31) pratiquée dans la face (18a) du disque et centrée par l'axe (19) de rotation du disque (18).

15. Dispositif conforme à la revendication 14, caractérisé en ce que la lèvre (32a) est située à distance d'une face radialement intérieure (31c) de la gorge (31).

16. Dispositif de coupe rotatif pour végétaux, notamment ensilés, en particulier dispositif de coupe latéral pour désileuse, comprenant un disque rotatif coupant (18) monté pour tourner selon un axe (19) transversal à une paroi (21) située en regard de l'une (18a) des faces du disque (18), caractérisé par des moyens de protection annulaires (32) solidaires de la paroi (21) à l'égard des rotations autour de l'axe (19), et par un joint à labyrinthe (31, 32a) entre les moyens de protection annulaires (32) et ladite face (18a) du disque (18), le joint à labyrinthe empêchant les végétaux de progresser vers l'axe au-delà du joint (31, 32a) le long de ladite face (18a).

**Patentansprüche**

1. Silofutterschneider, mit einer Halterung (7), Mitteln (17) zum frontalen Schneiden längs eines Unterrandes der Halterung (7) und einer rotierenden Schneidscheibe (18), die an einer Seite des Futterschneiders montiert ist, um sich um eine Achse (19) zu drehen, die quer zu einer Seitenwand (21) des Futterschneiders (17) verläuft, wobei erstere sich gegenüber einem Teil einer (18a) der Flächen der Scheibe (18) befindet, dadurch gekennzeichnet, daß sie Schutzmittel (32) umfaßt, die gehindert sind, sich mit der Scheibe (18) zu drehen und die eine ringförmige Lippe (32a) umfassen, die zentrisch zu der Drehachse (19) der Scheibe ist und an die genannte Fläche (18a) der Scheibe (18) angrenzt.

2. Futterschneider nach Anspruch 1, gekennzeichnet durch mit der Halterung (7) fest verbundene Mittel (36), die, in der Nähe der frontalen Schneidmittel (17), den Umfang (18b) der Scheibe (18) abdecken und im wesentlichen einen Zwischenraum (29) zwischen dem Umfang der Scheibe (18) und der Seitenwand (21) ausfüllen.

3. Futterschneider nach Anspruch 2, dadurch gekennzeichnet, daß die mit der Halterung fest verbundenen Mittel (36) auch in der Nähe der frontalen Schneidmittel (17) eine außenliegende Fläche einer umfangsmäßigen Zähnung (18b) der Scheibe abdecken.

4. Futterschneider nach Anspruch 2 oder 3, dadurch gekennzeichnet, daß die mit der Halterung (7) fest verbundenen Mittel (36) außerdem in der Nähe der frontalen Schneidmittel (17) einen Zwischenraum (29a) zwischen der Seitenwand (21) und einer Platte (32b) abdecken, die Bestandteil der Schutzmittel ist und von der ein Umfangsrand die vorerwähnte Lippe (32a) bildet.

5. Futterschneider nach einem der Ansprüche 2 bis 4, dadurch gekennzeichnet, daß die frontalen Schneidmittel mindestens ein hin- und hergehendes Messer (17) umfassen, und daß die mit der Halterung (7) fest verbundenen Mittel (36) außerdem eine Führungsfläche (36h) für ein Ende (17e) des hin- und hergehenden Messers (17) umfassen.

6. Futterschneider nach einem der Ansprüche 2 bis 5, dadurch gekennzeichnet, daß die mit der Halterung fest verbundenen Mittel ein mit der Halterung (7) fest verbundenes Formteil (36) umfassen.

7. Futterschneider nach einem der Ansprüche 1 bis 6, dadurch gekennzeichnet, daß die Halterung eine Platte (7) ist und mit den frontalen Schneidmitteln (17) eine Schneidpresse bildet, die dazu bestimmt ist, schwenkbar an der Hinterseite eines Silagefutterladewagens montiert zu werden, um aufeinanderfolgend stirnseitig und seitlich Scheiben (23a bis 23e) von Silage zu schneiden und diese Scheiben nacheinander in den Ladewagen zu befördern, in dem sie auf die Scheiben einen auf das Vorderende des Ladewagens gerichteten Schub ausübt.

8. Rotierende Schneidvorrichtung für Pflanzen, vor allem silierte Pflanzen, insbesondere Vorrichtung zum seitlichen Schneiden für Entsilierer, mit einer rotierenden Schneidscheibe (18), die so angeordnet ist, daß sie sich um eine Achse (19) dreht, die quer zu einer Wand (21) verläuft, die sich gegenüber einer (18a) der Flächen der Scheibe (18) befindet, dadurch gekennzeichnet, daß sie Schutzmittel (32) umfaßt, die daran gehindert sind, sich mit der Scheibe (18) zu drehen und die eine ringförmige Lippe (32a) umfassen, die zentrisch zu der Drehachse (19) der Scheibe ist und an die genannte Fläche (18a) der Scheibe (18) angrenzt.

9. Vorrichtung nach einem der Ansprüche 1 bis 8, dadurch gekennzeichnet, daß die Schutzmittel eine biegsame Platte 32b umfassen, die die ringförmige Lippe (32a) an ihrem Umfang trägt.

10. Vorrichtung nach Anspruch 9, gekennzeichnet durch einen restlichen Zwischenraum (29a) zwischen der biegsamen Platte und der Wand (21).

11. Vorrichtung nach einem der Ansprüche 9 oder 10, dadurch gekennzeichnet, daß die biegsame Platte (32b) über eine ringförmige Reibdichtung (34) nahe der Lippe (32a) an der Scheibe (18) anliegt.

12. Vorrichtung nach einem der Ansprüche 1 bis 11, dadurch gekennzeichnet, daß die Lippe (32a) aus dem Umfangsrand einer an der genannten Wand (21) befestigten Glocke (32) besteht.

13. Vorrichtung nach einem der Ansprüche 1 bis 12, dadurch gekennzeichnet, daß der Zahngrund (18c) einer Umfangszahnung (18b) der Scheibe (18) sich in einer geringen radialen Entfernung (d) jenseits der Lippe (31) befindet.

14. Vorrichtung nach einem der Anspüche 1 bis 13, dadurch gekennzeichnet, daß die Lippe (32a) in eine Ringnut (31) eingreift, die in der Fläche (18a) der Scheibe zentrisch zu der Drehachse (19) der Scheibe (18) vorgesehen ist.

15. Vorrichtung nach Anspruch 14, dadurch gekennzeichnet, daß die Lippe (32a) in Abstand von der radial innenliegenden Seitenflanke (31c) der Nut (31) angeordnet ist.

16. Rotierende Schneidvorrichtung für Pflanzen, vor allem silierte Pflanzen, insbesondere Vorrichtung zum seitlichen Schneiden für Entsilierer, mit einer rotierenden Schneidscheibe (18), die so angeordnet ist, daß sie sich um eine Achse (19) dreht, die quer zu einer Wand (21) verläuft, die sich gegenüber einer (18a) der Flächen der Scheibe (18) befindet, gekennzeichnet durch ringförmige Schutzmittel (32), die mit der Wand (21) zur Verhinderung von Drehungen um die Achse (19) fest verbunden sind, und durch eine Labyrinthdichtung (31, 32a) zwischen den ringförmigen Schutzmitteln (32) und der genannten Fläche (18a) der Scheibe (18), wobei die Labyrinthdichtung die Pflanzen daran hindert, längs der genannten Fläche (18a) über die Dichtung (31, 32a) hinaus in Richtung der Achse vorzudringen.

**Claims**

1. A cutting device for a silo contents extractor, comprising a frame (7), front cutting means (17) along a bottom edge of the frame, and a rotary cutter disc (18) mounted on one side of the cutting device for rotation about an axis (19) extending transversely of a side wall (21) of the cutting device (7) situated opposite a part of one (18a) of the surfaces of the disc (18), characterised in that it comprises protective means (32) which are prevented from rotating with the disc (18) and comprising an annular lip (32a) centred on the axis (19) of rotation of the disc and adjacent the said surface (18a) of the disc (18).

2. A device according to claim 1, characterised by means (36) rigidly connected to the frame (7) and which, in the vicinity of the front cutting means (17), mask the periphery (18b) of the disc (18) and substantially close a gap (29) between the periphery of the disc (18) and the side wall (21).

3. A device according to claim 2, characterised in that the said means (36) rigidly connected to the frame also mask - in the vicinity of the front cutting means (17) - an external surface of a peripheral toothing (18b) of the disc (18).

4. A device according to claim 2 or 3, characterised in that the means (36) rigidly connected to the frame (7) also close - in the vicinity of the front cutting means (17) - a gap (29a) between the side wall (21) and a web (38b) forming part of the protective means end one peripheral edge of which forms the said lip (32a).

5. A device according to any one of claims 2 to 4, characterised in that the front cutting means comprise at least one blade (17) adapted to reciprocate and in that the said means (36) rigidly connected to the frame (7) also comprise a guide configuration (36h) for one end (17a) of the reciprocating blade (17).

6. A device according to any one of claims 2 to 5, characterised in that the said means rigidly connected to the frame comprise a shaped part (36) rigidly connected to the frame (7).

7. A device according to any one of claims 1 to 6, characterised in that the frame in a panel (7) and together with the front cutting means (17) forms a cutting thrust member (8) adapted to be mounted for oscillation at the rear of a silo extractor bin (1) for frontally and laterally cutting successive silices (23a to 23e) of ensiled vegetables and feed said silices successively to the bin (1) by applying thereto a thrust derected towards the front of the bin (1).

8. A rotary cutting device for vegetables, inter alia ensiled vegetables, more particularly a lateral cutting device for a silo contents extractor, comprising a rotary cutter disc (18) mounted for rotation about an axis (19) extending transversely of a wall (21) situated opposite one (18a) of the surfaces of the disc (18), characterised in that it comprises protective means (32) which are prevented from rotating with the disc (18) and comprising an annular lip (32a) centred on the axis (19) of rotation of the disc and adjacent said surface (18a) of the disc (18).

9. A device according to any one to claims 1 to 8, characterised in that the protective means comprise a flexible a web (32b) carrying the annular lip (32a) on its periphery.

10. A device according to claim 9, characterised by a residual gap (29a) between the flexible web and the wall (21).

11. A device according to claim 9 or 10, characterised in that the flexible web (32b) is applied to the disc (18) by means of an annular friction lining (34) adjacent the lip (32a).

12. A device according to any one of claims 1 to 11, characterised in that the lip (32a) is formed by the peripheral edge of a bell (32) fixed to said wall (21).

13. A device according to any one of claims 1 to 12, characterised in that the ends (18c) of a peripheral toothing (18b) of the disc (18) are situated at a short radial distance (d) beyond the lip (31).

14. A device according to any one of claims 1 to 13, characterised in that the lip (32a) is engaged in an annular groove (31) formed in the surface (18a) of the disc end centred by the axis (19) of rotation of the disc (18).

15. A device according to claim 14, characterised in that the lip (32a) is situated at a distance from a radially inner surface (31c) of the groove (31).

16. A rotary cutting device for vegetables, inter alia ensiled vegetables, more particularly a lateral cutting device for a silo contents extractor, comprising a rotary cutter disc (18) mounted for rotation about an axis (19) extending transversely of a wall (21) situated opposite one (18a) of the surfaces of the disc (18), characterised by annular protective means (32) rigidly connected to the wall (21) relative to the rotations about the axis (19), and by a labyrinth seal (31, 32a) between the annular protective means (32) and the said surface (18a) of the disc (18), the labyrinth seal preventing the vegetables from proceeding towards the axis beyond the seal (31, 32a) along said surface (18a).

## FIG_1

## FIG_2

FIG.3

FIG.4

FIG.5

32
32b
32a
34
36b
36a
36d
18e
36
36c
17b
36a
17b
36g
36f
17a
36h
17a
17

FIG.6

36b
36d
36
36a
36c
36e
36f
36h
36g

FIG.7

36
36b
36c
36e
36f
36h
36g